# EUROPÄISCHE PATENTANMELDUNG

(11) **EP 0 581 081 A1**
(43) Veröffentlichungstag der Anmeldung: **02.02.1994**
(21) Anmeldenummer: 93110997.9
(22) Anmeldetag: 09.07.1993
(51) Int. Cl.: G01N 27/49

(54) **Verfahren zur Bestimmung von Persäuren**

(30) Priorität: 15.07.1992 DE 4223228
(71) Anmelder: PROMINENT DOSIERTECHNIK GMBH, D-69123 Heidelberg (DE)
(72) Erfinder: Pinkowski, Alexander, Dr., D-64757 Rothenberg (DE)
(74) Vertreter: Knoblauch, Andreas, Dr.-Ing.

(57) **Zusammenfassung**

Es wird ein Verfahren zur Bestimmung von Persäure in Gegenwart von Wasserstoffperoxid in einer Lösung mit folgenden Schritten angegeben:
- Einbringen einer Elektrodenanordnung, die zumindest eine Meßelektrode und eine Gegenelektrode aufweist, in die Lösung,
- Beaufschlagen der Elektroden mit unterschiedlichen Potentialen und
- Messen des Stroms durch die Meßelektrode.

Bei einem derartigen Verfahren besteht das Problem darin, daß Peressigsäurelösungen auch immer Wasserstoffperoxid enthalten und dieses ähnliche Reaktionen zeigt.

Um die Persäurekonzentration dennoch bestimmen zu können, wird eine Persäurekonzentration dem ermittelten Strom durch Vergleich seines Wertes mit einem entsprechenden Wert einer früher für die Elektrodenanordnung aufgenommenen Kalibrierungsfunktion zugeordnet.

## Beschreibung

Die vorliegende Erfindung betrifft ein Verfahren zur Bestimmung von Persäuren in Gegenwart von Wasserstoffperoxid in einer Lösung mit folgenden Schritten:
- Einbringen einer Elektrodenanordnung, die zumindest eine Meßelektrode und eine Gegenelektrode aufweist, in die Lösung,
- Beaufschlagen der Elektroden mit unterschiedlichen Potentialen und
- Messen des Stromes durch die Meßelektroden.

Persäuren, insbesondere Peressigsäure, werden wegen ihrer bakteriziden, fungiziden, sporiziden und viruziden Wirkung bei umweltverträglichen Reaktionsprodukten (z.B. bei Peressigsäure: Essigsäure, Wasser und Sauerstoff) vielfach zur Desinfektion eingesetzt. Da sich aber insbesondere Peressigsäure, insbesondere in verdünnten Lösungen und bei hohen Temperaturen und pH-Werten, mit der Zeit zersetzt, ist es notwendig, den Persäure-Gehalt regelmäßig zu bestimmen, um sicherzustellen, daß bei der Verwendung der die Persäure enthaltenden Lösung auch die gewünschte Wirkung eintritt.

Die quantitative Bestimmung von Persäuren ist schwierig, da wässrige Persäure-Lösungen auch immer Wasserstoffperoxid enthalten und dieses ähnliche Reaktionen zeigt. Bei titrimetrischen Bestimmungen werden deshalb nacheinander zwei verschiedene Reagenzien eingesetzt, um den Gehalt oder die Konzentration an Persäure, z.B. Peressigsäure, und Wasserstoffperoxid quantitativ nebeneinander bestimmen zu können.

EP 0 322 631 B1 offenbart ein Verfahren und Reagenz zur Bestimmung von Persäuren neben Wasserstoffperoxid, bei dem eine Probennahme notwendig ist. Nach Mischen der Probelösung mit geeigneten Reagenzlösungen in einer Küvette wird nach einer gewissen Reaktionszeit mittels eines Spektrophotometers die Extinktion bestimmt und mit einer Eichkurve verglichen.

Dieses bekannte Verfahren ist zeitaufwendig und erfordert eine entsprechende Ausrüstung sowie geschultes Personal.

Ein Verfahren der eingangs genannten Art ist aus EP 0 333 246 A2 bekannt. Hier wird eine amperometrische Messung durchgeführt, wobei die verwendete Potentialdifferenz nicht ersichtlich ist. Messungen dieser Art werden üblicherweise in den sogenannten Faraday'schen Bereichen durchgeführt, in denen sich Deckschichtströmen, die im wesentlichen den Auf- und Abbau von Deckschichten, z.B. Wasserstoff- und Sauerstoff-Chemisorptionsschichten, widerspiegeln, die Strom-Spannungscharakteristik der entsprechenden Elektrodenreaktion der zu untersuchenden Stoffe überlagert. Die Größe dieser Ströme ist von der Konzentration der zu untersuchenden Stoffe abhängig. Um die Einflüsse von und die Störungen durch Wasserstoffperoxid bei der Messung von Persäuren nach Möglichkeit zu eliminieren, wird im bekannten Fall ein die Meßelektrode bedeckender poröser Isolator vorgeschlagen, der die Meßelektrode von der Testflüssigkeit trennt und Einflüsse von Wasserstoffperoxid weitgehend ausschalten soll.

Der vorliegenden Erfindung liegt daher die Aufgabe zugrunde, ein leicht automatisierbares Verfahren zur Bestimmung von Persäuren in Gegenwart von Wasserstoffperoxid anzugeben, das mit einfachen Mitteln eine relativ genaue Bestimmung der Persäurekonzentration erlaubt.

Diese Aufgabe wird bei einem Verfahren der eingangs genannten Art dadurch gelöst, daß die Potentialdifferenz inmitten des Doppelschichtbereichs gewählt wird und eine Persäurekonzentration dem ermittelten Strom durch Vergleich seines Wertes mit einem entsprechenden Wert einer früher für die Elektrodenanordnung aufgenommenen Kalibrierungsfunktion zugeordnet wird.

Der Doppelschichtbereich ist ein Spannungs- oder Potential-Differenz-Bereich, bei dem sich an der Meßelektrode eine elektrochemische oder elektrische Doppelschicht ausbildet. Diese verhält sich wie ein Kondensator mit extrem geringem Plattenabstand. Man ging bisher davon aus, daß ein Strom, der bei einer Spannung oder Potentialdifferenz aus dem Doppelschichtbereich fließt, lediglich ein Umladungsstrom ist, mit dem dieser Kondensator umgeladen wird. Im Doppelschichtbereich finden normalerweise keine Faraday'schen Reaktionen statt (z.B. eine Reduktion oder Oxidation einer elektrochemisch aktiven Spezies, wie Wasserstoffperoxid oder Persäure). Wohl aber können sich im Doppelschichtbereich schon Vorstufen der erwähnten Deckschichtverbindungen bilden. Erstaunlicherweise hat sich nun herausgestellt, daß Komponenten dieses im Verhältnis zu den Faraday'schen Strömen sehr kleinen Stromes eine Abhängigkeit von der Persäurekonzentration in der die Meßelektrode umgebenden Lösung aufweisen. Obwohl die Gesetzmäßigkeit dieser Erscheinung noch nicht vollständig geklärt ist, nimmt man an, daß die Vorstufen der Deckschichtverbindungen bereits katalytisch aktiv sind und an ihnen die gewünschte elektrochemische Reduktion der Persäure weitgehend spezifisch, d.h. fast ohne Beeinflussung durch anwesendes Wasserstoffperoxid, abläuft. Es ergeben sich hier zwei für die Bestimmung der Persäure einander ergänzende Effekte. Zum einen kann eine persäurespezifische Reaktion ablaufen. Zum anderen entfallen hier Polarisierungseffekte, die möglicherweise in den Faraday'schen Bereichen ein Vordringen der Persäure zur Meßelektrode verhindern. Die Vorstufen der Deckschichtverbindungen, die katalytisch wirken, belegen die Oberfläche der Meßelektrode nur zu einem verschwindend geringen Teil, beispielsweise dem Bruchteil eines Prozents. Sie reichen aber aus, um einen persäurespezifischen Strom zu erzeugen. Hilfsmaßnahmen, wie poröse Isolatoren, sind unnötig. Der Vergleich mit einer früher aufgenommenen Kalibrierungsfunktion ermöglicht die Auswertung, ohne daß man die zugrunde liegenden Gesetzmäßigkeiten genau kennen muß. Die Kalibrierungsfunktion muß nicht mit derselben, sie kann auch mit einer baugleichen Elektrodenanordnung aufgenommen worden sein. Die Kalibrierungsfunktion kann beispielsweise in Form einer Kalibrierungskurve, aber auch in Form einer Matrix oder Tabelle oder einer anderen Form einer Wertezuordnung dargestellt werden.

Bevorzugterweise wird die Potentialdifferenz im Bereich des mittleren Drittels des Doppelschichtbereichs gewählt. Es hat sich herausgestellt, daß in diesem Bereich die Störungen durch Wasserstoffperoxid am geringsten sind.

Eine noch bessere Annäherung an ein optimales Meßergebnis kann man dadurch erhalten, daß die Elektrodenanordnung mit einem ersten Spannungszyklus innerhalb des Doppelschichtbereichs beaufschlagt und das Maximum des Stromes bestimmt wird, wobei das Maximum des Stromes mit der Kalibrierungsfunktion verglichen wird. Unter einem Spannungszyklus wird eine zeitlich veränderliche Spannung verstanden, die sich innerhalb eines vorbestimmten Zeitraums mindestens einmal in positiver und mindestens einmal in negativer Richtung verändert, wobei Anfangs- und Endwert im wesentlichen übereinstimmen. In diesem Fall ist man nicht mehr darauf angewiesen, die richtige Potentialdifferenz auf Anhieb zu treffen. Man kann sich dem optimalen Spannungswert auch iterativ nähern. Beim Strommaximum sind störende Einflüsse von Wasserstoffperoxid praktisch vernachlässigbar.

Die Kalibrierungsfunktion wird bevorzugterweise durch Einbringen der Elektrodenanordnung in eine Reihe von Lösungen mit bekannten, unterschiedlichen Persäurekonzentrationen erzeugt, wobei für jede Konzentration der erste Spannungszyklus durchfahren und das Strommaximum bestimmt wird. Die einzelnen Lösungen unterschiedlicher Konzentration können beispielsweise aus einer Stammlösung mit zunehmender Verdünnung hergestellt werden. Zwischen den bekannten Konzentrationen liegende Werte bei der Bestimmung bzw. Messung der Persäuren können gegebenenfalls durch Interpolation bestimmt werden.

Bevorzugterweise wird die Elektrodenanordnung auch in eine persäurefreie Lösung eingebracht und der Spannungszyklus durchfahren. Hierdurch läßt sich der Wert des Umladestroms der elektrochemischen Doppelschicht ermitteln, der dann herausgerechnet werden kann.

Mit Vorteil wird die Elektrodenanordnung mit einem zweiten Spannungszyklus beaufschlagt, der eine insbesondere symmetrisch beidseits der Nullinie verlaufenden Spannungsverlauf aufweist, dessen Maximalwerte durch die Potentialgrenzen der elektrolytischen Zersetzung der Lösung begrenzt sind. Er muß diese Potentialgrenzen jedoch nicht unbedingt erreichen. Durch diesen zweiten Spannungszyklus wird die Meßelektrode regeneriert. Oxidations- oder Reduktionsprodukte, die sich trotz allem an der Meßelektrode abgelagert haben, können entfernt werden. Alterungseinflüsse der Elektrode werden dabei weitgehend eliminiert.

Bevorzugterweise wird bei einem Durchlaufen des Spannungszyklus auf der Meßelektrode eine elektrokatalytisch aktive Schicht erzeugt und vollständig wieder abgebaut. Der vollständige Abbau der katalytischen Schicht bei jedem Spannungszyklus garantiert die Ausbildung einer frischen Oberfläche der Meßelektrode für die folgende Messung. Alterungserscheinungen werden damit verhindert. Hiermit lassen sich sehr genaue und reproduzierbare Meßergebnisse erzielen. Allerdings setzt diese Forderung eine Grenze in bezug auf die Geschwindigkeit, mit der der Spannungszyklus durchlaufen werden kann. Innerhalb des Spannungszyklus muß nämlich so viel Zeit zur Verfügung stehen, daß die elektrochemische Reaktion der Elektrode mit der Lösung insoweit vollständig ablaufen kann, daß die katalytische Schicht jedesmal frisch erzeugt und jedesmal wieder vollständig abgebaut werden kann. Außerdem muß der Spannungszyklus als Extremwerte bestimmte Mindestspannungen aufweisen.

Bevorzugterweise werden vor der Messung mehrere zweite Spannungszyklen durchfahren, und zwar so lange, bis entweder eine bestimmte Anzahl von zweiten Spannungszyklen erreicht ist oder sich die Stromverläufe aufeinanderfolgender Spannungszyklen nicht um mehr als ein vorbestimmtes Maß unterscheiden. Die eigentliche Messung beginnt erst dann, wenn sich nach dem Durchfahren der zweiten Spannungszyklen ein stabiler Zustand eingestellt hat oder ein solcher zu erwarten ist. Im allgemeinen genügen eine Aktivierungszeit von ca. 10 Minuten bei einer Potentialänderungsgeschwindigkeit von etwa 100 mV pro Sekunde und etwa 8 bis 12 Spannungszyklen. Hierdurch können Alterungseinflüsse der Elektroden weitgehend eliminiert werden.

Mit Vorteil werden mindestens zwei Meßelektroden verwendet, von denen beim Durchlaufen des Spannungszyklus die eine ein im wesentlichen der Persäurekonzentration und die andere ein im wesentlichen der Wasserstoffperoxidkonzentration proportionales Stromsignal erzeugt, das zur Feinkorrektur des Persäurekonzentration-Stromsignals verwendet wird. Ein derartiges Verfahren ist insbesondere dann von Vorteil, wenn ein großer Überschuß an Wasserstoffperoxid existiert, beispielsweise ein zehnfacher Überschuß. Wenn die Meßelektroden zeitlich nacheinander verwendet werden, scheidet eine gegenseitige Beeinflussung weitgehend aus.

Bevorzugterweise werden innerhalb eines ersten Spannungszyklus Potentialbereiche, in denen kein Strommaximum zu erwarten ist, schneller durchfahren als solche, in denen ein Strommaximum zu erwarten ist. Das Verfahren hat den Vorteil, daß für die Messung des Stromes und die Auswertung des Maximums mehr Zeit zur Verfügung steht, ohne daß die Zykluszeit wesentlich verlängert werden muß.

Die Auswertung wird insbesondere dann vereinfacht, wenn innerhalb eines ersten Spannungszyklus die Potentiale auf einem vorbestimmten Wert für eine vorbestimmte Zeit konstant gehalten werden. Die Werte können vorteilhafterweise der Potentialwert sein, bei dem das gewünschte Strommaximum auftritt, oder ein dazu dicht benachbarter Wert. Man kann dann für die Auswertung relativ einfache und damit preisgünstige Verfahren und Vorrichtungen verwenden.

Statt einen Spannungszyklus zu verwenden, kann man die Bestimmung auch dadurch durchführen, daß man die Elektroden nacheinander mit verschiedenen Spannungsblöcken beaufschlagt, die im wesentlichen rechteckförmig ausgebildet sind. Eine derartige Technik kann man auch als "Potentialsprungtechnik" bezeichnen. Anstelle des vollständigen Durchfahrens eines Spannungszyklus springt man relativ kurzzeitig nur einige wenige, insbesondere drei, charakteristische Potentiale bzw. Potentialdifferenzen an. Diese Potentiale und die betreffenden Haltezeiten, also die zeitliche Länge der Spannungsblöcke, werden so gewählt, daß die gleiche Art der Aktivierung der Arbeitselektrode bzw. der Messung erfolgt wie bei der Zyklovoltametrie, d.h. bei dem Messen mit Hilfe eines oder mehrerer Spannungszyklen.

Hierbei ist bevorzugt, daß die Spannungsblöcke verschiedene Potentialdifferenzen und mindestens einer, insbesondere alle, verschiedene Längen aufweisen. Man hat damit zwei Einflußgrößen, nämlich die Amplitude und die Länge der Blöcke, zur Verfügung, um eine gezielte Ansteuerung der Elektroden bewirken zu können. Hierdurch läßt sich das Verfahren in weiten Bereichen an die zu selektierende Spezies anpassen.

Vorteilhafterweise ist von den Potentialdifferenzen der verschiedenen Spannungsblöcke eine erste als anodisches Oxidationspotential, eine zweite als Reduktionspotential und eine dritte als Meßpotential ausgebildet. Im Grunde genommen müßten die Potentiale als Potentialdifferenzen bezeichnet werden. Der Begriff Potential wird jedoch aus Gründen der Kürze beibehalten. Man nimmt nun an, daß bei dem anodischen Oxidationspotential auf der Arbeitselektrode die Bildung von Vorstufen eines Oberflächenoxids erfolgt, das katalytisch für den Persäurenachweis wirksam ist. Bei dem Reduktionspotential erfolgt die Reduktion dieses Oxids und bei dem Meßpotential die zur Messung erforderliche elektrochemische Reduktion der Persäure. Mithin kann man durch Anlagen von drei geeigneten Potentialdifferenzen den gleichen Effekt wie bei einem Spannungszyklus erreichen.

Mit Vorteil ist zumindest das Meßpotential, insbesondere auch das Reduktionspotential, inmitten des Doppelschichtbereichs angeordnet. Wie oben erläutert, ergibt sich in diesem Bereich außerhalb des Faraday'schen Bereichs bereits eine Meßgröße, die der Persäurekonzentration im wesentlichen proportional ist, obwohl hier eigentlich keine entsprechenden Ströme zu erwarten gewesen wären.

Bevorzugterweise ist die Länge des Spannungsblocks mit dem Meßpotential wesentlich größer als die Menge der anderen Spannungsblöcke. Für die Messung steht damit eine ausreichende Zeit zur Verfügung. Die anderen Spannungsblöcke dienen lediglich der Vorbereitung der Messung und können dementsprechend wesentlich kürzer gewählt werden.

Vorteilhafterweise weisen die drei Spannungsblöcke zusammen eine Länge von weniger als 10 Sekunden auf. Mithin kann man innerhalb eines Zyklus von wenigen Sekunden durch kurzzeitiges Anlegen von drei geeigneten Potentialen die erforderliche Messung durchführen. Dies erlaubt kurze Reaktionszeiten bei genauen Messungen.

Vorteilhafterweise ist die Gegenelektrode in der Lösung unpolarisierbar. Dies läßt sich beispielsweise dadurch erreichen, daß die mit der Lösung in Kontakt stehende Fläche der Gegenelektrode wesentlich, z.B. hundertmal, größer als die mit der Lösung in Kontakt stehenden Fläche der Meßelektrode ist. Bei einer derartigen Konstellation kann man mit zwei Elektroden auskommen. Die Gegen- oder Hilfselektrode übernimmt hierbei die Funktion der Bezugs- oder Referenz-Elektrode mit.

Zusätzlich kann man jedoch auch eine Bezugselektrode verwenden, um das Potential der Meßelektrode exakt einzustellen. Dies kann beispielsweise mit Hilfe von potentiostatischen Schaltungen erreicht werden. In diesem Fall hat man zur Auswertung der Stromsignale nicht nur die Spannung zwischen Meß- und Gegenelektrode zur Verfügung, sondern auch das Potential der einzelnen Elektroden, wodurch sich gegebenenfalls genauere Messungen erzielen lassen.

Zur Festlegung des Potentials der Bezugselektrode wird bevorzugterweise ein als insbesondere interner Elektrolyt ausgebildeter Polymerelektrolyt verwendet. Dieser Polymerelektrolyt ist bis zu hohen Temperaturen (ca. 100 °C) und bei Verschmutzung der Meßlösung durch Elektrodengifte, wie Sulfide u.ä., beständig.

Als Meßelektrode wird bevorzugterweise eine membranbedeckte Elektrode verwendet. Die Verwendung einer membranbedeckten Elektrode verringert erheblich die Abhängigkeit des Meßsignals von der Anströmgeschwindigkeit der Meßelektrode durch die Lösung sowie die Verschmutzungsgefahr der Meßelektrode. Es ergibt sich eine Vergleichmäßigung des Meßsignals.

Bevorzugterweise wird als Meßelektrode mindestens eine Mikroelektrode verwendet. Als Mikroelektroden werden Elektroden bezeichnet, deren lineare Ausdehnung ihrer Kontaktfläche mit der Lösung kleiner als die Diffusionsschichtdicke ist. Die Diffusionsschichtdicke wird dabei von der Ionenkonzentration der Meßlösung bestimmt und beträgt im allgemeinen einige Mikrometer, so daß eine typische lineare Ausdehnung einer Mikroelektrode weniger als 10 µm betragen kann. Die Verwendung von Mikroelektroden ermöglicht Messungen in schlecht leitenden Medien, und zwar auch dann, wenn eine ausreichende Anströmung der Meßelektrode nicht vorhanden ist. Auch kann eine Membran entfallen.

Als Meßelektrode kann auch eine offene Makroelektrode in einer Strömungszelle verwendet werden, die einer definierten Anströmung ausgesetzt ist. Bei Makroelektroden ist die lineare Ausdehnung ihrer Kontaktfläche mit der Lösung größer als die Diffusionsschichtdicke. Insbesondere bei potentiodynamischer Arbeitsweise erscheint im Fall einer diffusionsbegrenzten Reaktion an der Makroelektrode das Strommaximum beim Durchlaufen des ersten Spannungszyklus, das zur Auswertung der Konzentration der Persäure verwendet werden kann.

Um auch Lösungen mit extremen pH-Werten, z.B. pH < 1, oder im extremen Temperaturbereich, z.B. > 80°C, untersuchen zu können, kann die Strömungszelle temperiert werden und/oder mit einer Pufferlösung versehen werden. Hierbei lassen sich bessere Arbeitsbedingungen für das Meßverfahren herstellen.

Ein bevorzugter Bereich für die Messung ist bei Zimmertemperatur, d.h. bei etwa 20° bis etwa 30°C, gegeben, wenn die Lösung schwach sauer oder neutral ist (pH 5...7).

Besonders einfach wird das Verfahren dadurch, daß die Kalibrierungsfunktion in einem nicht flüchtigen Datenspeicher abgelegt wird, der bei oder vor der Verwendung der Elektrodenanordnung in eine Signalverarbeitungseinrichtung eingesetzt wird, die die Stromsignale auswertet. Der Datenspeicher wird also zusammen mit der Elektrodenanordnung vertrieben. Zu jeder Elektrodenanordnung gehört genau ein Datenspeicher, der die für diese Elektrodenanordnung typischen Werte enthält. Die Signalverarbeitungseinrichtung kann dann für alle Elektrodenanordnungen gleich ausgebildet sein. Sie greift nur auf für die jeweilige Elektrodenanordnung spezifische Werte zurück.

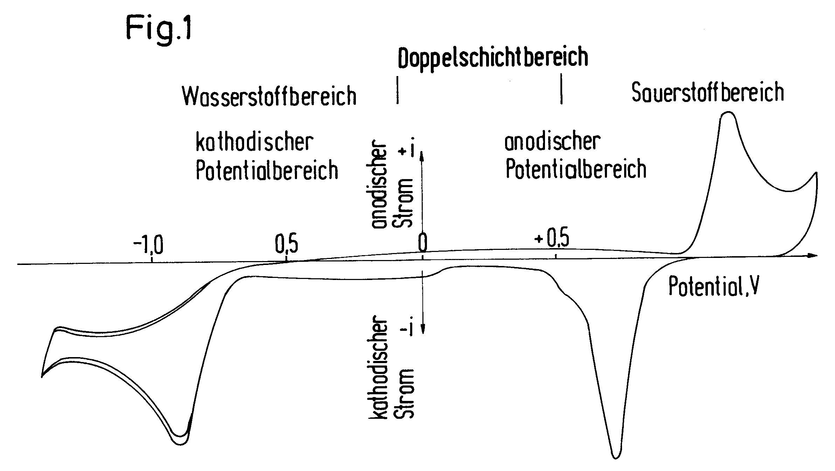

Die Erfindung wird im folgenden anhand von Beispielen für Peressigsäure beschrieben. Die Zeichnung, deren
- Fig. 1: ein Zyklovoltamogramm einer peressigsäurefreien Lösung und deren
- Fig. 2: die Anwendung einer Potentialsprungtechnik
zeigt, dient zur Erläuterung von Begriffen. Die Kurve wurde mit Hilfe einer Gold-Arbeitselektrode, einer Platin-Gegenelektrode und einer Silber/Silberchlorid-Referenzelektrode (3 m KCl) bei Raumtemperatur ohne Stickstoffspülung mit einer Geschwindigkeit von 100 mV/s aufgenommen, wobei das Potential gegenüber der Referenzelektrode angegeben ist.

### Beispiel 1

### Bestimmung von Peressigsäure mit einer Gold-Meßelektrode, Ermittlung der Kalibrierungsfunktion

Verwendet wird eine übliche Dreielektrodenanordnung, bestehend aus einer Meß- oder Arbeitselektrode, einer Bezugs- oder Referenzelektrode und einer Hilfs- oder Gegenelektrode.

Ein Golddraht der Reinheit m3N, einem Durchmesser von 1 mm und einer Länge von 5 mm (Johnson Matthey Alfa Products 00727) wird zur Hälfte seiner Länge in Epoxidharz (Araldit Ciba Geigy 2545) eingegossen, geschliffen und poliert. Dieser Golddraht dient als Meßelektrode. Die beiden anderen Elektroden sind eine käufliche Silber-Silberchlorid-Elektrode (Schott B 3420) als Bezugselektrode und ein Edelstahlblech (z.B. Werkstoff 1.4571) von 1 cm² Fläche als Hilfselektrode. Die Meßelektrode und die Hilfselektrode werden 5 Minuten in einem Ultraschallbad in einer üblichen Reinigungslösung (z.B. 10%ige RBS 50-Lösung der Fa. C. Roth) behandelt, um die Oberflächen fettfrei zu machen. Die Bezugselektrode wird ohne Vorbehandlung eingesetzt. Alle Messungen werden bei Raumtemperatur ausgeführt.

Zur Ermittlung der peressigsäurefreien Grundkurve werden die drei genannten Elektroden in einer üblichen Meßzelle mit Deckel und Gaseinleitungsmöglichkeit in die Lösung 1 (Grundelektrolyt) getaucht und mit den dafür vorgesehenen Anschlüssen eines Potentiostaten (PAR 273 von EG&G) verbunden. Die Lösung 1 wird zweimal vermessen. Einmal wird sie, wie angesetzt, d.h. luftgesättigt, verwendet und einmal wird sie vor der Messung durch 30-minütiges Einleiten von Stickstoff nahezu sauerstofffrei gemacht.

Lösung 1: 71,02 g Natriumsulfat (Merck 6649) werden in 0,5 L destilliertem Wasser gelöst und durch Zugabe von 0,1 normaler Salzsäure wird ein pH-Wert von 4,0 eingestellt.

Mit Hilfe des Potentiostaten und eines an diesen angeschlossenen X-Y-Schreibers (z.B. Rikadenki Modell RW-201T) wird in üblicher Weise eine zyklische Strom-Spannungs-Kurve (Zyklovoltamogramm) in den Potentialgrenzen der elektrolytischen Zersetzung der Meßlösung durch Wasserstoff- und Sauerstoffentwicklung aufgezeichnet. Im vorliegenden Fall sind diese Grenzen -1,4 V (kathodisches Umkehrpotential) und +1,5 V (anodisches Umkehrpotential). Alle Potentialangaben, auch im weiteren, beziehen sich auf das Potential der Arbeitselektrode gegenüber der Silber-/Silberchlorid-Bezugselektrode. Der stationäre Endzustand des Zyklovoltamogramms ist nach 10 kompletten Durchläufen zwischen kathodischem und anodischem Umkehrpotential erreicht, d.h. der 9. und 10. Durchlauf unterscheiden sich praktisch nicht mehr. Als Potentialvorschubgeschwindigkeit wurden 100 mV/s gewählt. Das im luftgesättigten Grundelektrolyten aufgenommene Zyklovoltamogramm dient als Nullkurve später zur Korrektur der in peressigsäurehaltigen Lösungen aufgenommenen Zyklovoltamogramme. Aus dem Zyklovoltamogramm im sauerstofffreien Grundelektrolyten wird der Doppelschichtbereich ermittelt. Er liegt im vorliegenden Fall etwa zwischen -100 und +500 mV.

Nach der Aufnahme des Zyklovoltamogramms im Grundelektrolyten wird das Meßgefäß mit destilliertem Wasser gereinigt und mit der Lösung 2 gefüllt.

Lösung 2: 71,02 g Natriumsulfat (Merck 6649) werden in 0,5 L destilliertem Wasser gelöst. Dann werden 3 mL 32%ige Peressigsäure-Lösung (Aldrich 26,936-6) zugegeben und der pH-Wert wird bei Lösung 1 auf 4,0 eingestellt.

Die angegebene Lösung 2 enthält ca. 200 mg Peressigsäure pro Liter Lösung (2000 ppm). Da Peressigsäure immer zu einem gewissen Prozentsatz in Wasserstoffperoxid und Essigsäure zerfallen ist, wird der genaue Peressigsäuregehalt der Lösung 2 in üblicher Weise titrimetrisch mit Kaliumjodid, Schwefelsäure, Natriumthiosulfat und Kaliumpermanganat bestimmt. Bei Verwendung der angegebenen stablilisierten Peressigsäure von Aldrich beträgt der Wasserstoffperoxidanteil weniger als 6 %.

Die Lösung 2 dient als Stammlösung zur Herstellung von Peressigsäurelösung mit geringerem Peressigsäuregehalt. Das geschieht durch Mischen der Lösung 2 mit Lösung 1. Um z.B. eine Peressigsäurelösung zu erhalten, die nur ein Zehntel des Peressigsäuregehalts der Lösung 2 besitzt, werden 50 mL Lösung 2 mit 450 mL Lösung 1 gemischt. Es werden auf diese Weise Lösungen mit 1000, 500, 200, 100, 50, 20, 10, 5 und 2 ppm Peressigsäure hergestellt.

In der so hergestellten und titrierten Lösung 2 sowie in den daraus durch Verdünnung hergestellten schwächer konzentrierten Peressigsäure-Lösungen werden in gleicher Weise, wie oben beim Grundelektrolyten beschrieben, zuerst ebenfalls Zyklovoltamogramme in den Potentialgrenzen -1,3 V und +1,5 V aufgenommen. Danach werden weitere Zyklovoltamogramme im Doppelschichtbereich aufgezeichnet. Aus diesen Zyklovoltamogrammen im Doppelschichtbereich wird schließlich der Potentialbereich ermittelt, in dem ein kathodisches Maximum des Strommeßsignals auftritt, das dem Peressigsäure-Gehalt der Lösungen proportional ist. In diesem Potentialbereich wird das Zyklovoltamogramm mit stark verringerter Potentialvorschubgeschwindigkeit (2 mV/s) durchfahren. Von den so ermittelten Werten des Strommaximums werden die im luftgesättigten Grundelektrolyten beim gleichen Potential ermittelten Stromwerte abgezogen.

Auf diese Weise werden 10 korrigierte Wertepaare aus Peressigsäure-Konzentration und Stromsignal ermittelt, die bei graphischer Auftragung eine lineare Kalibrierungskurve ergeben. Daraus ist ersichtlich, daß die verwendete Sensoranordnung mindestens im Bereich von 2 - 2000 ppm Peressigsäure verwendbar ist. Die Empfindlichkeit der Sensoranordnung (Steigung der Kalibrierungskurve) beträgt unter den angegebenen Temperatur- und pH-Bedingungen 0,15 nA/ppm Peressigsäure.

### Beispiel 2

### Ermittlung des Einflusses eines Überschusses an Wasserstoffperoxid auf das Peressigsaure-Signal

Es wird die gleiche Meßanordnung wie in Beispiel 1 verwendet (Dreielektrodenmeßzelle, Potentiostat, Schreiber, Zyklovoltamogramme). Diesesmal werden aus der Stammlösung 3 Meßlösungen mit konstanter Peressigsäure-Konzentration, jedoch steigenden Mengen an Wasserstoffperoxid, hergestellt.

Lösung 3: Es werden 71,02 g Natriumsulfat (Merck 6649) und 0,6 mL 32%ige Peressigsäure (Aldrich 26,936-6) in 0,5 L Wasser gelöst und der pH-Wert der Lösung wie in Beispiel 1 auf 4,0 eingestellt. Diese Stammlösung 3 enthält ca. 400 ppm Peressigsäure und 25 ppm Wasserstoffperoxid. Der genaue Gehalt wird, wie in Beispiel 1, durch Titration bestimmt.

Aus der Lösung 3 werden durch Zugabe 30%iger Wasserstoffperoxid-Lösung (Merck 7209) Meßlösungen mit höherem Wasserstoffperoxid-Gehalt hergestellt. Das Konzentrationsverhältnis von Peressigsäure zu Wasserstoffperoxid wird auf diese Weise von 1:1 bis 1:20 variiert.

Nun werden in gleicher Weise, wie in Beispiel 1, Zyklovoltamogramme im gesamten Potentialbereich, d.h. von -1,3 bis +1,5 V, in den Meßlösungen mit steigendem Wasserstoffperoxid-Überschuß aufgenommen und hinsichtlich des Grundelektrolytstromes korrigiert.

Man stellt dabei fest, daß beim Durchfahren des Zyklovoltamogramms von anodischer in kathodischer Richtung kathodisch vom relativ kleinen, kathodischen Peressigsäure-Strommaximum (Signal I) und außerhalb des Doppelschichtbereichs ein weiteres großes, schmales, kathodisches Strommaximum (Signal II) auftritt, dessen Höhe und Breite mit zunehmendem Überschuß an Wasserstoffperoxid wächst, also der kathodischen Reduktion dieser Substanz zuzuordnen ist. Bei dem Signal II handelt es sich um eine typische Faraday'sche Reaktion im Wasserstoffbereich des Zyklovoltamogramms.

Noch weiter kathodisch im Wasserstoffbereich erscheint ein weiteres hohes, breites, kathodisches Strommaximum (Signal III), dessen Signalhöhe sowohl mit steigender Peressigsäure-Konzentration als auch mit steigender Wasserstoffperoxid-Konzentration zunimmt. Das Signal III eignet sich wegen dieser Doppelabhängigkeit (Querempfindlichkeit gegenüber Wasserstoffperoxid) nicht zur Peressigsäure-Bestimmung.

Nun nimmt man Zyklovoltamogramme in den gleichen Lösungen mit steigendem Wasserstoffperoxid-Überschuß im Doppelschichtbereich auf. Dabei stellt man fest, daß das Signal I mit zunehmendem Wasserstoffperoxid-Überschuß zuerst seine Form verändert und zu einem Strom-Plateau wird, bis es schließlich nur noch eine Schulter eines offensichtlich außerhalb des Doppelschichtbereichs liegenden, weit größeren Stromsignals darstellt. Aus der Kenntnis des Zyklovoltamogramms im gesamten Potentialbereich weiß man, daß dieses störende Stromsignal das Signal II ist.

Mit den so ermittelten Daten ist man in der Lage abzuschätzen, bis zu welchem Wasserstoffperoxid-Überschuß das Signal I um weniger als eine vorgegebene Toleranz vom reinen Peressigsäure-Signal ohne Wasserstoffperoxid-Überschuß abweicht. Im Ergebnis dieser Auswertung findet man, daß im vorliegenden Fall bis zu einem 15-fachen Überschuß an Wasserstoffperoxid die Verfälschung des Signals I weniger als 10 % beträgt.

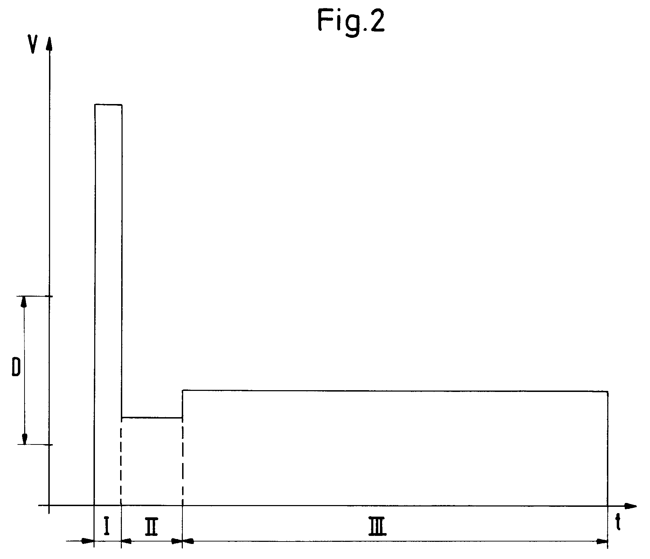

Die gleichen Ergebnisse lassen sich auch durch eine sogenannte Potentialsprungtechnik erzielen. Hierbei wird, wie in Fig. 2 dargestellt, darauf verzichtet, einen Spannungszyklus vollständig zu durchfahren. Man legt vielmehr an die Elektrodenanordnung nacheinander drei Spannungsblöcke an, die in Fig. 2 mit I, II und III gekennzeichnet sind. Wie ersichtlich ist, haben die drei Spannungsblöcke nicht nur unterschiedliche Amplituden, sondern auch unterschiedliche Längen. Im Spannungsblock I wird ein sogenanntes anodisches Oxidationspotential angelegt, bei dem vermutlich auf der Arbeitselektrode die Vorstufen eines Oberflächenoxids, das katalytisch für den Persäurenachweis wirksam ist, gebildet werden.

Im Spannungsblock II wird ein sogenanntes Reduktionspotential angelegt, bei dem die Reduktion dieses Oxids erfolgt. Im Spannungsblock III wird ein Meßpotential angelegt, bei dem die zur Messung erforderliche elektrochemische Reduktion der Persäure erfolgt. Sowohl das Reduktionspotential im Spannungsblock II als auch das Maßpotential im Spannungsblock III liegen inmitten des Doppelschichtbereichs D. Der Spannungsblock III hat die größte Länge, d.h. er ist wesentlich größer als die Spannungsblöcke II und I.

## Patentansprüche

1. Verfahren zur Bestimmen von Persäuren in Gegenwart von Wasserstoffperoxid in einer Lösung mit folgenden Schritten:
- Einbringen einer Elektrodenanordnung, die zumindest eine Meßelektrode und eine Gegenelektrode aufweist, in die Lösung,
- Beaufschlagen der Elektroden mit unterschiedlichen Potentialen und
- Messen des Stromes durch die Meßelektroden dadurch gekennzeichnet, daß die Potentialdifferenz inmitten des Doppelschichtbereichs gewählt wird und eine Persäurekonzentration dem ermittelten Strom durch Vergleich seines Wertes mit einem entsprechenden Wert einer früher für die Elektrodenanordnung aufgenommenen Kalibrierungsfunktion zugeordnet wird.

2. Verfahren nach Anspruch 1, dadurch gekennzeichnet, daß die Potentialdifferenz im Bereich des mittleren Drittels des Doppelschichtbereichs gewählt wird.

3. Verfahren nach Anspruch 1 oder 2, dadurch gekennzeichnet, daß die Elektrodenanordnung mit einem ersten Spannungszyklus innerhalb des Doppelschichtbereichs beaufschlagt und das Maximum des Stromes bestimmt wird, wobei das Maximum des Stroms mit der Kalibrierungsfunktion verglichen wird.

4. Verfahren nach Anspruch 3, dadurch gekennzeichnet, daß die Kalibrierungsfunktion durch Einbringen der Elektrodenanordnung in eine Reihe von Lösungen mit bekannten, unterschiedlichen Persäurekonzentrationen erzeugt wird, wobei für jede Konzentration der erste Spannungszyklus durchfahren und das Strommaximum bestimmt wird.

5. Verfahren nach Anspruch 5, dadurch gekennzeichnet, daß die Elektrodenanordnung auch in eine persäurefreie Lösung eingebracht wird und der erste Spannungszyklus durchfahren wird.

6. Verfahren nach einem der Ansprüche 1 bis 5, dadurch gekennzeichnet, daß die Elektrodenanordnung mit einem zweiten Spannungszyklus beaufschlagt wird, der einen insbesondere symmetrisch beidseits der Nullinie verlaufenden Spannungsverlauf aufweist, dessen Maximalwerte durch die Potentialgrenzen der elektrolytischen Zusetzung der Lösung begrenzt sind.

7. Verfahren nach Anspruch 6, dadurch gekennzeichnet, daß bei einem Durchlaufen des zweiten Spannungszyklus auf der Meßelektrode eine elektrokatalytisch aktive Schicht erzeugt und vollständig wieder abgebaut wird.

8. Verfahren nach einem der Ansprüche 1 bis 7, dadurch gekennzeichnet, daß vor der Messung mehrere zweite Spannungszyklen durchfahren werden, und zwar so lange, bis entweder eine bestimmte Anzahl von zweiten Spannungszyklen erreicht ist oder sich die Stromverläufe aufeinanderfolgender Spannungszyklen nicht um mehr als ein vorbestimmtes Maß unterscheiden.

9. Verfahren nach einem der Ansprüche 1 bis 8, dadurch gekennzeichnet, daß mindestens zwei Meßelektroden verwendet werden, von denen beim Durchlaufen des Spannungszyklus die eine ein im wesentlichen der Persäurekonzentration und die andere ein im wesentlichen der Wasserstoffperoxidkonzentration proportionales Stromsignal erzeugt, das zur Feinkorrektur des Persäurekonzentration-Stromsignals verwendet wird.

10. Verfahren nach einem der Ansprüche 3 bis 9, dadurch gekennzeichnet, daß innerhalb eines ersten Spannungszyklus Potentialbereiche, in denen kein Strommaximum zu erwarten ist, schneller durchfahren werden als solche, in denen ein Strommaximum zu erwarten ist.

11. Verfahren nach Anspruch 10, dadurch gekennzeichnet, daß innerhalb eines ersten Spannungszyklus die Potentiale auf einem vorbestimmten Wert für eine vorbestimmte Zeit konstant gehalten werden.

12. Verfahren nach Anspruch 1 oder 2, dadurch gekennzeichnet, daß die Elektroden nacheinander mit verschiedenen, im wesentlichen rechteckigen Spannungsblöcken beaufschlagt werden.

13. Verfahren nach Anspruch 12, dadurch gekennzeichnet, daß die Spannungsblöcke verschiedene Potentialdifferenzen und mindestens eine, insbesondere alle, verschiedene Längen aufweisen.

14. Verfahren nach Anspruch 12 oder 13, dadurch gekennzeichnet, daß von den Potentialdifferenzen der verschiedenen Spannungsblöcken eine erste als anodisches Oxidationspotential, eine zweite als Reduktionspotential und eine dritte als Meßpotential ausgebildet ist.

15. Verfahren nach Anspruch 14, dadurch gekennzeichnet, daß zumindest das Meßpotential, insbesondere auch das Reduktionspotential, inmitten des Doppelschichtbereichs angeordnet ist.

16. Verfahren nach einem der Ansprüche 12 bis 15, dadurch gekennzeichnet, daß die Länge des Spannungsblocks mit dem Meßpotential wesentlich größer als die Länge der anderen Spannungsblöcke ist.

17. Verfahren nach einem der Ansprüche 12 bis 16, dadurch gekennzeichnet, daß die drei Spannungsblöcke zusammen eine Länge von weniger als 10 Sekunden aufweisen.

18. Verfahren nach einem der Ansprüche 1 bis 17, dadurch gekennzeichnet, daß die Gegenelektrode in der Lösung unpolarisierbar ist.

19. Verfahren nach einem der Ansprüche 1 bis 18, dadurch gekennzeichnet, daß in der Elektrodenanordnung zusätzlich eine Bezugselektrode verwendet wird.

20. Verfahren nach Anspruch 19, dadurch gekennzeichnet, daß als insbesondere interner Elektrolyt für die Bezugselektrode ein Polymerelektrolyt verwendet wird.

21. Verfahren nach einem der Ansprüche 1 bis 20, dadurch gekennzeichnet, daß eine membranbedeckte Elektrode als Meßelektrode verwendet wird.

22. Verfahren nach einem der Ansprüche 1 bis 21, dadurch gekennzeichnet, daß als Meßelektrode mindestens eine Mikroelektrode verwendet wird.

23. Verfahren nach einem der Ansprüche 1 bis 20, dadurch gekennzeichnet, daß als Meßelektrode eine offene Makroelektrode in eine Strömungszelle verwendet wird, die einer definierten Anströmung ausgesetzt wird.

24. Verfahren nach Anspruch 23, dadurch gekennzeichnet, daß die Strömungszelle temperiert wird und/oder mit einer Pufferlösung versehen wurde.

25. Verfahren nach einem der Ansprüche 1 bis 24, dadurch gekennzeichnet, daß die Messung in schwach saurer oder neutraler Lösung bei Zimmertemperatur durchgeführt wird.

26. Verfahren nach einem der Ansprüche 1 bis 25, dadurch gekennzeichnet, daß die Kalibrierungsfunktion in einem nicht flüchtigen Datenspeicher abgelegt wird, der bei oder vor der Verwendung der Elektrodenanordnung in eine Signalverarbeitungseinrichtung eingesetzt wird, die die Stromsignale auswertet.
